# EUROPEAN PATENT APPLICATION

(11) **EP 4 494 469 A1**
(43) Date of publication of application: **22.01.2025**
(21) Application number: 23770781.5
(22) Date of filing: 14.03.2023
(51) Int. Cl.: A01N 61/00, A01P 7/00, A01N 43/56, A01N 43/653

(54) **WATER-BASED SUSPENSION-TYPE AGRICHEMICAL COMPOSITION**

(30) Priority: 15.03.2022 JP 2022040499
(71) Applicant: Sumitomo Chemical Company, Limited, Tokyo 103-6020 (JP)
(72) Inventor: MIZOGUCHI, Nanako, Tokyo 103-6020 (JP); MIYOSHI, Nozomi, Tokyo 103-6020 (JP); TERADA, Takatoshi, Takarazuka-shi, Hyogo 665-8555 (JP)
(74) Representative: Vossius & Partner Patentanwälte Rechtsanwälte mbB
(86) International application number: PCT/JP2023/009831
(87) International publication number: WO 2023/176826

(57) **Abstract**

The present invention provides an aqueous suspension agrochemical composition showing a suppression of a crystal growth during storage and a bubble generation during dilution. The present invention provides also an aqueous suspension agrochemical composition comprising (a) Inpyrfluxam, (b) one or more agrochemically active ingredients having a melting point of 50 °C or high (excluding inpyrfluxam), (c) a lignin sulfonate, and (d) a polyoxyalkylene aryl phenyl ether phosphoric acid ester salt.

## Description

### TECHNICAL FIELD

This application claims priority to and the benefit of Japanese Patent Application No. 2022-040499 filed March 15, 2022, the entire contents of which are incorporated herein by reference.

The present invention relates to an aqueous suspension agrochemical composition.

### BACKGROUND ART

To date, a certain agrochemical formulation containing Inpyrfluxam and another agrochemically active ingredient has been known, and come into practice use (see patent literature 1).

On the other hand, in order to obviate a problem of dusting during preparation of a spray liquid in the case of a wettable powder, an aqueous suspension agrochemical composition is suggested (see patent literature 2).

### CITATION LIST

### PATENT LITERATURE

Patent Literature 1: JP 2011-246452 A
Patent Literature 2: JP 2003-95803 A

### SUMMARY OF THE INVENTION

### (PROBLEMS TO BE SOLVED BY INVENTION)

In the development of the aqueous suspension agrochemical composition, there may be a problem of an occurrence of a nozzle clogging due to an occurrence of crystal growth during shipping or storage or a development of a lot of bubbles during preparation of a dilution, depending on agrochemically active ingredient used or formulation adjuvant to be used.

### (MEANS TO SOLVE PROBLEMS)

The present inventors have intensively studied to find an aqueous suspension agrochemical composition showing a suppression of a crystal growth during storage and a bubble generation during dilution.

That is, the present invention encompasses the followings [1] to [11].
[1] An aqueous suspension agrochemical composition comprising (a) Inpyrfluxam, (b) one or more agrochemically active ingredients having a melting point of 50 °C or high (excluding inpyrfluxam), (c) a lignin sulfonate, and (d) a polyoxyalkylene aryl phenyl ether phosphoric acid ester salt.
[2] The aqueous suspension agrochemical composition described in [1] wherein the agrochemically active ingredient having a melting point of 50 °C or high is one or more compounds selected from the group consisting of a fungicidal active ingredient, an insecticidal active ingredient, a miticidal active ingredient, and a nematicidal active ingredient.
[3] The aqueous suspension agrochemical composition described in [1] wherein the agrochemically active ingredient having a melting point of 50 °C or high includes a fungicidal active ingredient.
[4] The aqueous suspension agrochemical composition described in [1] wherein the agrochemically active ingredient having a melting point of 50 °C or high includes one or more compounds selected from the group consisting of a sterol biosynthesis inhibitor and a mitochondrial electron transport chain complex III inhibitor.
[5] The aqueous suspension agrochemical composition described in any one of [1] to [4] wherein the composition comprises two kinds of (b) the agrochemically active ingredients having a melting point of 50 °C or high.
[6] The aqueous suspension agrochemical composition described in [5] wherein the two kinds of (b) the agrochemically active ingredients having a melting point of 50 °C or high are a sterol biosynthesis inhibitor and a mitochondrial electron transport chain complex III inhibitor.
[7] The aqueous suspension agrochemical composition described in any one of [1] to [6] wherein a weight ratio of (c) the lignin sulfonate to (d) the polyoxyalkylene aryl phenyl ether phosphoric acid ester salt is within a range of 6:1 to 1:2.
[8] The aqueous suspension agrochemical composition described in any one of [1] to [7] wherein a weight ratio of a total amount of (a) Inpyrfluxam and (b) the agrochemically active ingredient having a melting point of 50 °C or high to a total amount of (c) the lignin sulfonate and (d) the polyoxyalkylene aryl phenyl ether phosphoric acid ester salt is within a range of 15:1 to 1:1.
[9] The aqueous suspension agrochemical composition described in any one of [1] to [8] wherein the composition further comprises any agrochemically active ingredient which is different from (a) Inpyrfluxam and (b) the agrochemically active ingredient having a melting point of 50 °C or high.
[10] The aqueous suspension agrochemical composition described in [9] wherein the agrochemically active ingredient which is different from (a) Inpyrfluxam and (b) the agrochemically active ingredient having a melting point of 50 °C or high is a bioagrochemically active ingredient.
[11] A method for improving a storage stability of an aqueous suspension agrochemical composition, which comprises a step of adding (c) a lignin sulfonate and (d) a polyoxyalkylene aryl phenyl ether phosphoric acid ester salt to a composition comprising (a) Inpyrfluxam and (b) one or more agrochemically active ingredients having a melting point of 50 °C or high (excluding Inpyrfluxam).

The present invention can provide an aqueous suspension agrochemical composition showing a suppression of a crystal growth during storage as well as a bubble generation during preparation of a spray liquid.

### MODE FOR CARRYING OUT THE INVENTION

An aqueous suspension agrochemical composition of the present invention (hereinafter, referred to as "composition of the present invention") comprises inpyrfluxam. The content of inpyrfluxam is within a range of usually 1 to 20 % by weight, and preferably 3 to 10 % by weight, as opposed to 100 % by weight of the composition of the present invention.

The composition of the present invention comprises an agrochemically active ingredient having a melting point of 50 °C or high excluding inpyrfluxam (hereinafter, sometimes referred to as "agrochemically active ingredient (b)"). The agrochemically active ingredient (b) may be contained in the composition of the present invention by one kind, or two or more kinds (such as three kinds, four kinds, or five kinds) thereof. The content of the agrochemically active ingredient (b) is as the total amounts thereof within a range of usually 3 to 30 % by weight, and preferably 5 to 20 % by weight, as opposed to 100 % by weight of the composition of the present invention.

The total amount of each content of inpyrfluxam and the agrochemically active ingredient (b) is within a range of usually 4 to 50 % by weight, preferably 5 to 40 % by weight, more preferably 8 to 40 % by weight, and further more preferably 10 to 30 % by weight, as opposed to 100 % by weight of the composition of the present invention.

Examples of the agrochemically active ingredient (b) used in the composition of the present invention include one or more ingredients selected from the group consisting of an insecticidal active ingredient, a miticidal active ingredient, a nematicidal active ingredient, a fungicidal active ingredient, a herbicidal active ingredient, a plant growth regulating active ingredient, a safener , a synergistic agent, a repellant active ingredient, molluscicidal active ingredient and an insect pheromone active ingredient.

Examples of the insecticidal active ingredient, the miticidal active ingredient, and the nematicidal active ingredient include Deltamethrin, Tralomethrin, Acrinathrin, Bifenthrin, Propoxur, Isoprocarb, Xylylcarb, Metolcarb, Thiodicarb, XMC, Carbaryl, Pirimicarb, Carbofuran, Methomyl, Fenoxycarb, Acephate, Trichlorfon, Tetrachlorvinphos, Dimethylvinphos, Pyridaphenthion, Azinphos-ethyl, Azinphos-methyl, Diflubenzuron, Chlorfluazuron, Lufenuron, Hexaflumuron, Flufenoxuron, Flucycloxuron, Cyromazine, Diafenthiuron, Hexythiazox, Novaluron, Teflubenzuron, Triflumuron, Imidacloprid, Acetamiprid, Clothianidin, Nitenpyram, Thiamethoxam, Dinotefuran, Thiacloprid, Spinosad, Flubendiamide, Chlorantraniliprole, Cyantraniliprole, Tetraniliprole, Cyclaniliprole, Fipronil, Ethiprole, Spirotetramat, Spiromesifen, Spirodiclofen, Spiropidion, Triflumezopyrim, Sulfoxaflor, Abamectin, Emamectin benzoate, Lepimectin, Milbemectin, Pymetrozine, Pyrifluquinazon, Clofentezine, Hexythiazox, Etoxazole, Chlorfenapyr, Cartap, Thiocyclam, Bensultap, Buprofezin, Chromafenozide, Methoxyfenozide, Tebufenozide, Amitraz, Fluacrypyrim, Bifenazate, Fenpyroximate, Pyrimidifen, Pyridaben, Tebufenpyrad, Tolfenpyra, Indoxacarb, Oxazosulfyl, Metaflumizone, Cyenopyrafen, Cyflumetofen, Pyflubumide, Flonicamid, Broflanilide, Fluxametamide, Flupyrimin, Flometoquin, Benzpyrimoxan, Fenazaquin, Hydramethylnon, Triazamate, Sulfonamide, boric acid, Spinetoram, Beta-cyfluthrin, Alpha-cypermethrin, Tioxazafen, Afidopyropen, Fluazaindolizine, Fluopyram, Isocycloseram, Dimpropyridaz, Cyclobutrifluram, Beta-cypermethrin, Epsilon-Momfluorothrin, and Flupyradifurone.

Examples of the fungicidal active ingredient include Fenpyrazamine, Mandestrobin, Benomyl, Carbendazim, Thiabendazole, Thiophanate-methyl, Diethofencarb, Procymidone, Iprodione, Vinclozolin, Diniconazole, Epoxiconazol, Tebuconazole, Difenoconazole, Cyproconazole, Flusilazole, Triadimefon, Metalaxyl, Furametpyr, Mepronil, Flutolanil, Thifluzamide, Tolclofos-methyl, Fosetyl aluminum, Pyrazophos, Pyrimethanil, Mepanipyrim, Cyprodinil, Fludioxonil, Phenpyraclonil, Blasticidin S, Kasugamycin, Polyoxin, Validamycin, Azoxystrobin, Kresoxim-methyl, Metominostrobin, Chlorothalonil, Mancozeb, Captan, Folpet, Tricyclazole, Pyroquilone, Probenazole, Fthalide, Cymoxanil, Dimethomorph, Famoxadone, Oxolinic acid, Fluazinam, Ferimzone, Diclocymet, Orysastrobin, Isotianil, Tiadinil, Thiuram, Picoxystrobin, Trifloxystrobin, Fluoxastrobin, Fenamidone, Pyribencarb, Fenbuconazole, Hexaconazole, Imibenconazole, Ipconazole, Metconazole, Myclobutanil, Simeconazole, Hydroxyisoxazol, Pencycuron, Fluopicolide, Pyriofenone, Isofetamid, Fluopyram, Thifluzamide, Fluxapyroxad, Isopyrazam, Penflufen, Penthiopyrad, Boscalid, Pyraziflumid, Cyazofamid, Amisulbrom, Ametoctradin, Cyprodinil, Mepanipyrim, Oxathiapiprolin, Triforine, Fenarimol, Oxpoconazole fumarate, Fenhexamid, Pyributicarb, Benthiavalicarb-isopropyl, Mandipropamid, Tolprocarb, Acibenzolar S-methyl, Fosetyl aluminum, Flusulfamide, Flutianil, Dichlobentiazox, Tebufloquin, Picarbutrazox, Ziram, Iminoctadine Albesilate, Iminoctadine acetate, Dithianon, Fuoroimide, Benzovindiflupyr, Prothioconazole, Carboxin, Pydiflumetofen, Flutriafol, Triticonazole, Fluquinconazole, Metyltetraprole, Fenpicoxamid, Sedaxane, Isoflucypram, Silthiofam, Bixafen, Dimoxystrobin, Pyridachlometyl, Ipflufenoquin, Bromuconazole, Triadimenol, Florylpicoxamid, Fluoxapiprolin, Ethaboxam, Quinofumelin, Cyflufenamid, Penconazole, Proquinazid, Pyraclostrobin, Triflumizole, Dodemorph, Propamocarb, Aminopyrifen, Mefentrifluconazole, Flufenoxadiazam, and Fluoxytioconazole.

Examples of the herbicidal active ingredient include Atrazine, Metribuzin, Fluometuron, Isoproturon, Bromoxynil, Ioxynil, Pendimethalin, 2,4-D and salts or ester thereof, Dicamba and salts thereof, Fluoxypyr, Mecoprop, Bensulfuron-methyl, Metsulfuron-methyl, Nicosulfuron, Primisulfuron-methyl, Cyclosulfamuron, Imazosulfuron, Propyrisulfuron, Sulfosulfuron, Imazapyr, Imazaquin, Imazethapyr, Bispyribac sodium salt, Acifluorfen, Acifluorfen sodium salt, Sulfentrazone, Paraquat, Paraquat dichloride, Flumetsulam, Triflusulfuron-methyl, Fenoxaprop P-ethyl, Diflufenican, Norflurazon, Isoxaflutole, Glufosinate and salts thereof, Glyphosate and salts thereof, Bentazone, Mefenacet, Propanil, Fluthiacet, Fluthiacet-methyl, Flumiclorac-pentyl, Flumioxazin, Bromobutide, Pentoxazone, Fenquinotrione, Pyraclonil, Metazulfuron, Pyrimisulfan, Triafamone, Tefuryltrione, Tolpyralate, Pyroxasulfon, Enoxasulfone, Ipfencarbazone, Cyclopyrimorate, Florpyrauxifenbenzyl, Cloransulam, Diclosulam, Imazamox, Chlorimuron-ethyl, Benfluralin, Bicyclopyrone, Dimethametryn, Dithiopyr, Fluoroglycofen-ethyl, Indanofan, and Propaquizafop.

Examples of the plant growth regulating active ingredient include Maleic hydrazide, Chlormequat chloride, Ethephon, Gibberellic acid, Mepiquat chloride, Thidiazuron, Inabenfide, Paclobutrazol, AVG, Uniconazol P, and Prohexadione calcium.

Preferable examples of the agrochemically active ingredient (b) include a fungicidal active ingredient.

Preferable examples of the fungicidal active ingredient include a sterol biosynthesis inhibitor and a mitochondrial electron transport chain complex III inhibitor. Examples of the sterol biosynthesis inhibitor include Cyproconazole, Difenoconazole, Fenbuconazole, Hexaconazole, Imibenconazole, Ipconazole, Metconazole, Myclobutanil, Simeconazole, Tebuconazole, Prothioconazole, Mefentrifluconazole, Epoxiconazol, Bromuconazole, and Fluoxytioconazol.

Examples of the mitochondrial electron transport chain complex III inhibitor include Picoxystrobin, Trifloxystrobin, Fluoxastrobin, Fenamidone, Orysastrobin, Mandestrobin, Azoxystrobin, Kresoxim-methyl, Metominostrobin, and Pyraclostrobin.

Also preferable examples of another fungicidal active ingredient include Chlorothalonil, Mancozeb, Ethaboxam, and Flufenoxadiazam.

Also preferable examples of another agrochemically active ingredient (b) include an insecticidal active ingredient, a miticidal active ingredient and a nematicidal active ingredient.

Preferable examples of the insecticidal active ingredient, the miticidal active ingredient, and the nematicidal active ingredient include Clothianidin, Imidacloprid, Thiamethoxam, Thiacloprid, Flupyradifurone, Flupyrimin, Triflumezopyrim, Chlorantraniliprole, Cyantraniliprole, Tetraniliprole, Bifenthrin, Broflanilide, Isocycloseram, Fluxametamide, Dimpropyridaz, Fluazaindolizine, Tioxazafen, Abamectin, Fluopyram, and Cyclobutrifluram.

When the composition of the present invention comprises two kinds of the active ingredients, examples of the combination include the following. In the combinations indicated below, (a) represents Inpyrfluxam. (a) + Cyproconazole, (a) + Difenoconazole, (a) + Fenbuconazole, (a) + Hexaconazole, (a) + Imibenconazole, (a) + Ipconazole, (a) + Metconazole, (a) + Myclobutanil, (a) + Simeconazole, (a) + Tebuconazole, (a) + Prothioconazole, (a) + Mefentrifluconazole, (a) + Epoxiconazol, (a) + Bromuconazole, (a) + Fluoxytioconazole, (a) + Picoxystrobin, (a) + Trifloxystrobin, (a) + Fluoxastrobin, (a) + Fenamidone, (a) + Orysastrobin, (a) + Mandestrobin, (a) + Azoxystrobin, (a) + Kresoxim-methyl, (a) + Metominostrobin, (a) + Pyraclostrobin, (a) + Chlorothalonil, (a) + Mancozeb, (a) + Ethaboxam, and (a) + Flufenoxadiazam.

When the composition of the present invention comprises three kinds of the active ingredients, the combination of Inpyrfluxam, one kind of the sterol biosynthesis inhibitor, and one kind of the mitochondrial electron transport chain complex III inhibitor is preferable and examples of the combination include the following. In the combinations indicated below, (a) represents Inpyrfluxam.
(a) + Cyproconazole + Picoxystrobin, (a) + Cyproconazole + Trifloxystrobin, (a) + Cyproconazole + Fluoxastrobin, (a) + Cyproconazole + Fenamide, (a) + Cyproconazole + Orysastrobin, (a) + Cyproconazole + Mandestrobin, (a) + Cyproconazole + Azoxystrobin, (a) + Cyproconazole + Kresoxim-methyl, (a) + Cyproconazole + Metominostrobin, (a) + Cyproconazole + Pyraclostrobin, (a) + Cyproconazole + Metyltetraprole,
(a) + Difenoconazole + Picoxystrobin, (a) + Difenoconazole + Trifloxystrobin, (a) + Difenoconazole + Fluoxastrobin, (a) + Difenoconazole + Fenamide, (a) + Difenoconazole + Orysastrobin, (a) + Difenoconazole + Mandestrobin, (a) + Difenoconazole + Azoxystrobin, (a) + Difenoconazole + Kresoxim-methyl, (a) + Difenoconazole + Metominostrobin, (a) + Difenoconazole + Pyraclostrobin, (a) + Difenoconazole + Metyltetraprole,
(a) + Fenbuconazole + Picoxystrobin, (a) + Fenbuconazole + Trifloxystrobin, (a) + Fenbuconazole + Fluoxastrobin, (a) + Fenbuconazole + Fenamide, (a) + Fenbuconazole + Orysastrobin, (a) + Fenbuconazole + Mandestrobin, (a) + Fenbuconazole + Azoxystrobin, (a) + Fenbuconazole + Kresoxim-methyl, (a) + Fenbuconazole + Metominostrobin, (a) + Fenbuconazole + Pyraclostrobin, (a) + Fenbuconazole + Metyltetraprole,
(a) + Hexaconazole + Picoxystrobin, (a) + Hexaconazole + Trifloxystrobin, (a) + Hexaconazole + Fluoxastrobin, (a) + Hexaconazole + Fenamide, (a) + Hexaconazole + Orysastrobin, (a) + Hexaconazole + Mandestrobin, (a) + Hexaconazole + Azoxystrobin, (a) + Hexaconazole + Kresoxim-methyl, (a) + Hexaconazole + Metominostrobin, (a) + Hexaconazole + Pyraclostrobin, (a) + Hexaconazole + Metyltetraprole,
(a) + Imibenconazole + Picoxystrobin, (a) + Imibenconazole + Trifloxystrobin, (a) + Imibenconazole + Fluoxastrobin, (a) + Imibenconazole + Fenamide, (a) + Imibenconazole + Orysastrobin, (a) + Imibenconazole + Mandestrobin, (a) + Imibenconazole + Azoxystrobin, (a) + Imibenconazole + Kresoxim-methyl, (a) + Imibenconazole + Metominostrobin, (a) + Imibenconazole + Pyraclostrobin, (a) + Imibenconazole + Metyltetraprole,
(a) + Ipconazole + Picoxystrobin, (a) + Ipconazole + Trifloxystrobin, (a) + Ipconazole + Fluoxastrobin, (a) + Ipconazole + Fenamide, (a) + Ipconazole + Orysastrobin, (a) + Ipconazole + Mandestrobin, (a) + Ipconazole + Azoxystrobin, (a) + Ipconazole + Kresoxim-methyl, (a) + Ipconazole + Metominostrobin, (a) + Ipconazole + Pyraclostrobin, (a) + Ipconazole + Metyltetraprole,
(a) + Metconazole + Picoxystrobin, (a) + Metconazole + Trifloxystrobin, (a) + Metconazole + Fluoxastrobin, (a) + Metconazole + Fenamide, (a) + Metconazole + Orysastrobin, (a) + Metconazole + Mandestrobin, (a) + Metconazole + Azoxystrobin, (a) + Metconazole + Kresoxim-methyl, (a) + Metconazole + Metominostrobin, (a) + Metconazole + Pyraclostrobin, (a) + Metconazole + Metyltetraprole,
(a) + Myclobutanil + Picoxystrobin, (a) + Myclobutanil + Trifloxystrobin, (a) + Myclobutanil + Fluoxastrobin, (a) + Myclobutanil + Fenamide, (a) + Myclobutanil + Orysastrobin, (a) + Myclobutanil + Mandestrobin, (a) + Myclobutanil + Azoxystrobin, (a) + Myclobutanil + Kresoxim-methyl, (a) + Myclobutanil + Metominostrobin, (a) + Myclobutanil + Pyraclostrobin, (a) + Myclobutanil + Metyltetraprole,
(a) + Simeconazole + Picoxystrobin, (a) + Simeconazole + Trifloxystrobin, (a) + Simeconazole + Fluoxastrobin, (a) + Simeconazole + Fenamide, (a) + Simeconazole + Orysastrobin, (a) + Simeconazole + Mandestrobin, (a) + Simeconazole + Azoxystrobin, (a) + Simeconazole + Kresoxim-methyl, (a) + Simeconazole + Metominostrobin, (a) + Simeconazole + Pyraclostrobin, (a) + Simeconazole + Metyltetraprole,
(a) + Tebuconazole + Picoxystrobin, (a) + Tebuconazole + Trifloxystrobin, (a) + Tebuconazole + Fluoxastrobin, (a) + Tebuconazole + Fenamide, (a) + Tebuconazole + Orysastrobin, (a) + Tebuconazole + Mandestrobin, (a) + Tebuconazole + Azoxystrobin, (a) + Tebuconazole + Kresoxim-methyl, (a) + Tebuconazole + Metominostrobin, (a) + Tebuconazole + Pyraclostrobin, (a) + Tebuconazole + Metyltetraprole,
(a) + Prothioconazole + Picoxystrobin, (a) + Prothioconazole + Trifloxystrobin, (a) + Prothioconazole + Fluoxastrobin, (a) + Prothioconazole + Fenamide, (a) + Prothioconazole + Orysastrobin, (a) + Prothioconazole + Mandestrobin, (a) + Prothioconazole + Azoxystrobin, (a) + Prothioconazole + Kresoxim-methyl, (a) + Prothioconazole + Metominostrobin, (a) + Prothioconazole + Pyraclostrobin, (a) + Prothioconazole + Metyltetraprole,
(a) + Mefentrifluconazole + Picoxystrobin, (a) + Mefentrifluconazole + Trifloxystrobin, (a) + Mefentrifluconazole + Fluoxastrobin, (a) + Mefentrifluconazole + Fenamide, (a) + Mefentrifluconazole + Orysastrobin, (a) + Mefentrifluconazole + Mandestrobin, (a) + Mefentrifluconazole + Azoxystrobin, (a) + Mefentrifluconazole + Kresoxim-methyl, (a) + Mefentrifluconazole + Metominostrobin, (a) + Mefentrifluconazole + Pyraclostrobin, (a) + Mefentrifluconazole + Metyltetraprole,
(a) + Epoxiconazol + Picoxystrobin, (a) + Epoxiconazol + Trifloxystrobin, (a) + Epoxiconazol + Fluoxastrobin, (a) + Epoxiconazol + Fenamide, (a) + Epoxiconazol + Orysastrobin, (a) + Epoxiconazol + Mandestrobin, (a) + Epoxiconazol + Azoxystrobin, (a) + Epoxiconazol + Kresoxim-methyl, (a) + Epoxiconazol + Metominostrobin, (a) + Epoxiconazol + Pyraclostrobin, (a) + Epoxiconazol + Metyltetraprole,
(a) + Bromuconazole + Picoxystrobin, (a) + Bromuconazole + Trifloxystrobin, (a) + Bromuconazole + Fluoxastrobin, (a) + Bromuconazole + Fenamide, (a) + Bromuconazole + Orysastrobin, (a) + Bromuconazole + Mandestrobin, (a) + Bromuconazole + Azoxystrobin, (a) + Bromuconazole + Kresoxim-methyl, (a) + Bromuconazole + Metominostrobin, (a) + Bromuconazole + Pyraclostrobin, (a) + Bromuconazole + Metyltetraprole,
(a) + Fluoxytioconazole + Picoxystrobin, (a) + Fluoxytioconazole + Trifloxystrobin, (a) + Fluoxytioconazole + Fluoxastrobin, (a) + Fluoxytioconazole +Fenamide, (a) + Fluoxytioconazole + Orysastrobin, (a) + Fluoxytioconazole + Mandestrobin, (a) + Fluoxytioconazole + Azoxystrobin, (a) + Fluoxytioconazole + Kresoxim-methyl, (a) + Fluoxytioconazole + Metominostrobin, (a) + Fluoxytioconazole + Pyraclostrobin, (a) + Fluoxytioconazole + Metyltetraprole.

The weight ratio of Inpyrfluxam to the agrochemically active ingredient (b) which are contained as the active ingredient in the composition of the present invention is not particularly limited, and specific examples thereof as "Inpyrfluxam : each one kind of the agrochemically active ingredient (b)" include a range of usually 1:500 to 500:1, preferably 1:100 to 100:1, more preferably 1:10 to 10:1, further more preferably 1:5 to 5:1, and still further more preferably 3:10 to 10:3. Specific examples thereof include 1:500, 1:100, 1:90, 1:80, 1:70, 1:60, 1:50, 1:40, 1:30, 1:20, 1:19, 1:18, 1:17, 1:16, 1:15, 1:14, 1:13, 1:12, 1:11, 1:10, 1:9, 1:8, 1:7, 1:6, 1:5, 2:9, 1:4, 2:7, 3:10, 1:3, 3:8, 2:5, 3:7, 4:9, 1:2, 5:9, 4:7, 3:5, 5:8, 2:3, 7:10, 5:7, 3:4, 7:9, 4:5, 5:6, 6:7, 7:8, 8:9, 9:10, 1:1, 10:9, 9:8, 8:7, 7:6, 6:5, 5:4, 9:7, 4:3, 7:5, 10:7, 3:2, 8:5, 5:3, 7:4, 9:5, 2:1, 9:4, 7:3, 5:2, 8:3, 3:1, 10:3, 7:2, 4:1, 9:2, 5:1, 6:1, 7:1, 8:1, 9:1, 10:1, 11:1, 12:1, 13:1, 14:1, 15:1, 16:1, 17:1, 18:1, 19:1, 20:1, 30:1, 40:1, 50:1, 60:1, 70:1, 80:1, 90:1, 100:1, 150:1, 200:1, 250:1, 300:1, 400:1, and 500:1. The above-mentioned ratio may be also expressed with "approximately". The term of "approximately" means plus and minus (±) 10 %, and for example, "approximately 1:2" means "1:1.8 to 1:2.2".

The composition of the present invention comprises lignin sulfonate (c). Examples of the lignin sulfonate as used herein include sodium lignin sulfonate, potassium lignin sulfonate, calcium lignin sulfonate, and ammonium lignin sulfonate, and preferably sodium lignin sulfonate.

A weight average molecular weight of the lignin sulfonate as used herein is usually within a range of 2,000 to 12,000. The weight average molecular weight of the lignin sulfonate as used herein means a relative molecular weight as opposed to sodium polystyrene sulfonate as a standard substance, which can be measured by a gel permeation chromatography (GPC). The lignin sulfonate may be used as a commercially available product. Examples of the lignin sulfonate include Reax 85A (sodium lignin sulfonate, manufactured by Ingevity Corp.), Reax 910 (sodium lignin sulfonate, manufactured by Ingevity Corp.), Polyfon F (sodium lignin sulfonate, manufactured by Ingevity Corp.), and Polyfon H (sodium lignin sulfonate, manufactured by Ingevity Corp.).

The content of the lignin sulfonate in the composition of the present invention is within a range of usually 0.1 to 10 % by weight, preferably 0.5 to 5 % by weight, and more preferably 0.8 to 5 % by weight, as opposed to 100 % by weight of the composition of the present invention.

The composition of the present invention comprises polyoxyalkylene aryl phenyl ether phosphoric acid ester salt (d). The polyoxyalkylene aryl phenyl ether phosphoric acid ester salt is preferably polyoxyethylene tristyryl phenyl ether phosphoric acid ester salt, and examples of the commercially available polyoxyethylene tristyryl phenyl ether phosphoric acid ester salt include Soprophor FL (manufactured by Solvay Nicca, Ltd.), soprophor FLK (manufactured by Solvay Nicca, Ltd.), STEPFAC TSP PE-K (manufactured by Stepan Corp.) and Newkalgen FS-3PG (manufactured by TAKEMOTO OIL & FAT Co., Ltd.).

The content of the polyoxyalkylene aryl phenyl ether phosphoric acid ester salt in the composition of the present invention is within a range of usually 0.05 to 10 % by weight, preferably 0.1 to 5 % by weight, and more preferably 0.5 to 5 % by weight, as opposed to 100 % by weight of the composition of the present invention.

The weight ratio of the lignin sulfonate (c) to the polyoxyalkylene aryl phenyl ether phosphoric acid ester salt (d) in the composition of the present invention is within a range of usually 12:1 to 1:3, preferably 6:1 to 1:2, and more preferably 5:1 to 1:2.

The weight ratio of the total amount of each content of Inpyrfluxam (a) and the agrochemically active ingredient (b) to the total amount of each content of the lignin sulfonate (c) and the polyoxyalkylene aryl phenyl ether phosphoric acid ester salt (d) is within a range of usually 15:1 to 1:1, preferably 12:1 to 3:1, and more preferably 10:1 to 5:1.

The composition of the present invention comprises water. Water as used herein is not particularly limited, and water which is usually used in aqueous suspension agrochemical composition, such as tap water, well water, and deionized water can be used.

The content of water in the composition of the present invention is within a range of usually 40 to 75 % by weight, and preferably 55 to 70 % by weight, as opposed to 100 % by weight of the composition of the present invention.

The composition of the present invention may further comprise one or more additives for formations which are used in a usual aqueous suspension agrochemical composition. Examples of additives for formations include a thickener, an antifreezing agent, a pH regulator, a defoamer, a preservative, a surfactant, and a coloring agent. When the composition of the present invention comprises the additives for formulation, the total amount of each content thereof is within a range of usually 1 to 50 % by weight, and preferably 1 to 20 % by weight, as opposed to 100 % by weight of the composition of the present invention.

Examples of the thickener include natural polysaccharides such as xanthan gum, welan gum, gellam gum, guar gum, locust bean gum, gum arabic, carrageenan, pectin, and sodium alginate; cellulose derivatives such as methyl cellulose, carboxymethyl-cellulose, carboxymethyl-cellulose sodium, hydroxyethyl cellulose, hydroxypropyl cellulose, and hydroxypropyl methylcellulose; water-soluble synthetic polymers such as polyvinyl alcohol, polyvinylpyrrolidone, as well as polyacrylates and derivatives thereof; mineral fine powders such as colloidal hydrous aluminum silicate, colloidal hydrous magnesium silicate, magnesium aluminum silicate, and silica; and the others.

Examples of the antifreezing agent include ethylene glycol, diethylene glycol, glycerin, propylene glycol, and the others.

Examples of the pH regulator include carboxylic acids and salts thereof such as citric acid monohydrate, acetic acid, and sorbic acid; phosphoric acid and salts thereof, as well as boric acid and salts thereof, and the others.

Examples of the defoamer include silicone defoamers.

Examples of the preservative include butyl paraben (n-butyl parahydroxy benzoate), 1,2-benzisothiazoline-3-one, and the others.

Examples of the surfactant include anionic surfactant and nonionic surfactant. Examples of the anionic surfactant include alkyl sulfate, polyoxyetylene alkyl ether sulfate, polyoxyetylene aryl phenyl ether sulfate, naphthalene sulfonate and formaldehyde condensations thereof, alkyl naphthalene sulfonate and formaldehyde condensations thereof, phenyl sulfonate, dialkyl sulfosuccinates, acyl taurates, alkyl phosphates, polyoxyetylene alkyl ether phosphates, as well as salts of styrene-maleic acid copolymer, and examples of the nonionic surfactant include polyoxyethylene polyoxypropylene block copolymer, polyoxyetylene alkyl ether, polyoxyethylene aryl phenyl ether, sorbitan fatty acid ester, sucrose fatty acid ester, and alkyl polyglycoside, and the others.

Examples of the coloring agent include inorganic pigments such as iron oxide, titanium oxide, and prussian blue; and organic pigments such as alizarin dye, azo dye, and metallophthalocyanine dye; and the others.

The composition of the present invention may further comprise any agrochemically active ingredients which are different from (a) Inpyrfluxam and (b) the agrochemically active ingredient having a melting point of 50 °C or high (excluding Inpyrfluxam). The agrochemically active ingredient is particularly preferably a bioagrochemically active ingredient (biological control agents). Also the composition of the present invention may be used mixing with or used in combination with another formulation containing a bioagrochemically active ingredient.

The bioagrochemically active ingredient (biological control agents) represents any ingredients which have a control effect against harmful organisms (such as insecticidal activity, miticidal activity, nematicidal activity, fungicidal activity, herbicidal activity, and the like); or any ingredients which have a plant growth regulating effect such as rhizobia or mycorrhizal fungi.

Examples of the bioagrochemically active ingredient include Bacillus thuringiensis subsp. kurstraki strain ABTS-351, Bacillus thuringiensis subs. kurstraki strain MBP123, Bacillus thuringiensis subs. aizawai strain ABTS-1857, Bacillus thuringiensis strain EX297512, Metarhizium anisopliae strain F52, Bacillus firmus strain l-1582, Pasteuria nishizawae strain Pn1, Bacillus amyloliquefaciens strain PTA-4838, Bacillus subutilis strain QST713, Agrobactrerium radiobacter strain K84, Bacillus amyloliquefaciens strain MBI 600, Bacillus pumilus strain QST2808, Burkholderia cepacia, Gliocladium catenulatum strain J1446, Pseudomonas chlororaphis strain MA342, Pseudomonas fluorescens, Pythium oligandrum strain DV74, Streptomyces griseoviridis strain K61, Trichoderma gamsii, Trichoderma asperellum, Trichoderma harzianum strain T-22, Trichoderma virens strain GL-21, Streptomyces lydicus strain WYEC108, Bradyrhizobium japonicum strain TA-11, Sinorhizobium meliloti, Rhizobium leguminosarum, Rhizophagus intraradices strain RTI-801, Penicillium bilaiae, Mesorhizobium ciceri.

The composition of the present invention can be used to control harmful organisms. The harmful organisms as used herein represent phytopathogenic microorganisms (such as fungi, Oomycete, Phytomyxea, and bacteria); and harmful arthropod (such as harmful insects and harmful mites) and harmful nematodes. Examples of the fungi include Ascomycota, Basidiomycota, Blasocladiomycota, Chytridiomycota, Mucoromycota, and Olpidiomycota.

Examples of plant diseases caused by phytopathogenic microorganisms include the followings. The descriptions in a parenthesis indicates an scientific name of phytopathogenic microorganism that causes each of the disease.
Rice diseases:
   blast (Pyricularia oryzae), brown spot (Cochliobolus miyabeanus), sheath blight (Rhizoctonia solani), bakanae disease (Gibberella fujikuroi), downy mildew (Sclerophthora macrospora), false blast and head blight (Epicoccum nigrum), and seedling blight (Trichoderma viride, Rhizopus oryzae);
Wheat diseases:
   powdery mildew (Blumeria graminis), fusarium blight (Fusarium graminearum, Fusarium avenaceum, Fusarium culmorum, Microdochium nivale), stripe rust (Puccinia striiformis), stem rust (Puccinia graminis), leaf rust (Puccinia recondita), snow mould (Microdochium nivale, Microdochium majus), typhula snow blight (Typhula incarnata, Typhula ishikariensis), loose smut (Ustilago tritici), stinking smut (Tilletia caries, Tilletia controversa), eyespot (Pseudocercosporella herpotrichoides), leaf blotch (Septoria tritici), glume blotch (Stagonospora nodorum), tan spot (Pyrenophora tritici-repentis), rhizoctonia seeding blight (Rhizoctonia solani), take-all disease (Gaeumannomyces graminis), and blast (Pyricularia graminis-tritici);
Barley diseases:
   powdery mildew (Blumeria graminis), fusarium head blight (Fusarium graminearum, Fusarium avenaceum, Fusarium culmorum, Microdochium nivale), stripe rust (Puccinia striiformis), stem rust (Puccinia graminis), dwarf leaf rust (Puccinia hordei), loose smut (Ustilago nuda), scald (Rhynchosporium secalis), net blotch (Pyrenophora teres), spot blotch (Cochliobolus sativus), stripe (Pyrenophora graminea), Ramularia disease (Ramularia collo-cygni), and
   rhizoctonia seeding blight (Rhizoctonia solani);
Corn diseases:
   rust (Puccinia sorghi), southern rust (Puccinia polysora), northern leaf blight (Setosphaeria turcica), tropical rust (Physopella zeae), southern leaf blight (Cochliobolus heterostrophus), anthracnose (Colletotrichum graminicola), gray leaf spot (Cercospora zeae-maydis), eyespot (Kabatiella zeae), phaeosphaeria leaf spot (Phaeosphaeria maydis), diplodia rot (Stenocarpella maydis, Stenocarpella macrospora), stalk rot (Fusarium graminearum, Fusarium verticilioides, Colletotrichum graminicola), smut (Ustilago maydis), and Physoderma brown spot and Physoderma stalk rot (Physoderma maydis);
Cotton diseases:
   anthracnose (Colletotrichum gossypii), grey mildew (Ramularia areola), alternaria leaf spot (Alternaria macrospora, Alternaria gossypii), and black root rot (Thielaviopsis basicola);
Coffee diseases:
   rust (Hemileia vastatrix), and leaf spot (Cercospora coffeicola);
Rape seed diseases:
   sclerotinia rot (Sclerotinia sclerotiorum), gray leaf spot (Alternaria brassicae), root rot (Phoma lingam), and light leaf spot (Pyrenopeziza brassicae);
Sugar cane diseases:
   rust (Puccinia melanocephela, Puccinia kuehnii), and smut (Ustilago scitaminea);
Sunflower diseases:
   rust (Puccinia helianthi), and downy mildew (Plasmopara halstedii) ;
Citrus diseases:
   melanose (Diaporthe citri), scab (Elsinoe fawcetti), green mold (Penicillium digitatum), blue mold (Penicillium italicum), Phytophthora rot (Phytophthora parasitica, Phytophthora citrophthora), and aspergillus rot (Aspergillus niger);
Apple diseases:
   blossom blight (Monilinia mali), valsa canker (Valsa ceratosperma), powdery mildew (Podosphaera leucotricha), alternaria leaf spot (Alternaria alternata apple pathotype), scab (Venturia inaequalis), bitter rot (Glomerella cingulata, Colletotrichum acutatum), blotch (Diplocarpon mali), ring rot (Botryosphaeria berengeriana), crown rot (Phytophtora cactorum), and rust (Gymnosporangium juniperi-virginianae, Gymnosporangium yamadae);
Pear diseases:
   scab (Venturia nashicola, Venturia pirina), black spot (Alternaria alternata Japanese pear pathotype), and rust (Gymnosporangium haraeanum);
Peach diseases:
   brown rot (Monilinia fructicola), scab (Cladosporium carpophilum), Phomopsis rot (Phomopsis sp.), and leaf curl (Taphrina deformans);
Grape diseases:
   anthracnose (Elsinoe ampelina), ripe rot (Glomerella cingulata, Colletotrichum acutatum), powdery mildew (Uncinula necator), rust (Phakopsora ampelopsidis), black rot (Guignardia bidwellii), and downy mildew (Plasmopara viticola);
Japanese persimmon diseases:
   anthracnose (Gloeosporium kaki, Colletotrichum acutatum), and leaf spot (Cercospora kaki, Mycosphaerella nawae);
Fig diseases:
   rust (Phakopsora nishidana));
Diseases of gourd family:
   anthracnose (Colletotrichum lagenarium), powdery mildew (Sphaerotheca fuliginea), gummy stem blight (Didymella bryoniae), Corynespora leaf spot (Corynespora cassiicola), fusarium wilt (Fusarium oxysporum), downy mildew (Pseudoperonospora cubensis), phytophthora rot (Phytophthora capsici), and damping-off (Pythium sp.);
Tomato diseases:
   early blight (Alternaria solani), leaf mold (Cladosporium fulvum), Cercospora leaf mold (Pseudocercospora fuligena), late blight (Phytophthora infestans), and powdery mildew (Leveillula taurica);
Eggplant diseases:
   brown spot (Phomopsis vexans), and powdery mildew (Erysiphe cichoracearum) ;
Cruciferous vegetables diseases:
   alternaria leaf spot (Alternaria japonica), white spot (Cercosporella brassicae), clubroot (Plasmodiophora brassicae), downy mildew (Peronospora parasitica), and white rust (Albugo candida);
Welsh onion disease:
   rust (Puccinia allii);
Soybean diseases:
   purple stain (Cercospora kikuchii), sphaceloma scab (Elsinoe glycines), pod and stem blight (Diaporthe phaseolorum var. sojae), rust (Phakopsora pachyrhizi), target spot (Corynespora cassiicola), anthracnose (Colletotrichum glycines, Colletotrichum truncatum), Rhizoctonia rot (Rhizoctonia solani), septoria brown spot (Septoria glycines), Cercospora leaf spot (Cercospora sojina), stem rot (Sclerotinia sclerotiorum), powdery mildew (Microsphaera diffusa), phytophthora stem and root rot (Phytophthora sojae), downy mildew (Peronospora manshurica), sudden death syndrome (Fusarium virguliforme), red crown rot (Calonectria ilicicola), and Diaporthe/Phomopsis complex (Diaporthe longicolla);
Kidney bean diseases:
   stem rot (Sclerotinia sclerotiorum), rust (Uromyces appendiculatus), angular leaf spot (Phaeoisariopsis griseola), anthracnose (Colletotrichum lindemuthianum), and Fusarium root-rot (Fusarium solani);
Peanut diseases:
   leaf spot (Cercospora personata), brown leaf spot (Cercospora arachidicola), southern blight (Sclerotium rolfsii), and Cylindrocladium black rot (Calonectria ilicicola);
Garden pea disease:
   powdery mildew (Erysiphe pisi), and root rot (Fusarium solani);
Potato diseases:
   early blight (Alternaria solani), late blight (Phytophthora infestans), Pink rot (Phytophthora erythroseptica), powdery scab (Spongospora subterranea f. sp. subterranea), verticillium wilt (Verticillium albo-atrum, Verticillium dahliae, Verticillium nigrescens), dry rot (Fusarium solani), and potato wart (Synchytrium endobioticum);
Strawberry disease:
   powdery mildew (Sphaerotheca humuli);
Tea diseases:
   net blister blight (Exobasidium reticulatum), white scab (Elsinoe leucospila), gray blight (Pestalotiopsis sp.), and anthracnose (Colletotrichum theae-sinensis);
Tobacco diseases:
   brown spot (Alternaria longipes), anthracnose (Colletotrichum tabacum), blue mold (Peronospora tabacina), and black shank (Phytophthora nicotianae);
Sugar beet diseases:
   cercospora leaf spot (Cercospora beticola), leaf blight (Thanatephorus cucumeris), root rot (Thanatephorus cucumeris), and aphanomyces root rot (Aphanomyces cochlioides), and rust (Uromyces betae);
Rose diseases:
   black spot (Diplocarpon rosae), and powdery mildew (Sphaerotheca pannosa);
Chrysanthemum diseases:
   leaf blight (Septoria chrysanthemi-indici), and white rust (Puccinia horiana);
Onion diseases:
   botrytis leaf blight (Botrytis cinerea, Botrytis byssoidea, Botrytis squamosa), gray-mold neck rot (Botrytis allii), and small sclerotial neck rot (Botrytis squamosa);
Various crops diseases:
   Botrytis rot (Botrytis cinerea), sclerotinia rot (Sclerotinia sclerotiorum), seedling blight (Pythium aphanidermatum, Pythium irregulare, Pythium ultimum);
Japanese radish disease:
   alternaria leaf spot (Alternaria brassicicola);
Turfgrass diseases:
   dollar spot (Sclerotinia homoeocarpa), brown patch and large patch (Rhizoctonia solani), and pythium bligt (Pythium aphanidermatum);
Banana disease:
   Sigatoka disease (Mycosphaerella fijiensis, Mycosphaerella musicola);
Lentils disease:
   ascochyta blight (Ascochyta lentis);
Chickpea disease:
   ascochyta blight (Ascochyta rabiei);
Green pepper disease:
   anthracnose (Colletotrichum scovillei);
Mango disease:
   anthracnose (Colletotrichum acutatum);
Fuit trees diseases:
   white root rot (Rosellinia necatrix), and violet root rot (Helicobasidium mompa);
Postharvest diseases of fruits (for example, apple and pear) :
   Mucor rot diseases (Mucor piriformis);
   Seed diseases or diseases in the early stages of the growth of various plants caused by Aspergillus spp., Penicillium spp., Fusarium spp., Gibberella spp., Tricoderma spp., Thielaviopsis spp., Rhizopus spp., Mucor spp., Corticium spp., Phoma spp., Rhizoctonia spp. or Diplodia spp.; and the like;
Viral diseases:
   Lettuce big-vein disease transmitted by Olpidium brassicae, and viral diseases of several crops transmitted by Polymyxa spp. (e.g. Polymyxa betae and Polymyxa graminis);
Diseases caused by bacteria:
   bacterial seedling blight of rice (Burkholderia plantarii), bacterial spot of cucumber (Pseudomonas syringae pv. Lachrymans), bacterial wilt of eggplant (Ralstonia solanacearum), canker of citrus (Xanthomonas citri), bacterial soft rot of Chinese cabbage (Erwinia carotovora), scab of potato (Streptomyces scabiei), Goss's wilt of corn (Clavibacter michiganensis), Pierce's disease of grapes, olive and peach (Xylella fastidiosa), and crown gall of Rosaceae plants such as apple, peach, cherries (Agrobacterium tumefaciens).

In the above phytopathogenic microorganisms, variations within the species are not particularly limited. Namely, the phytopathogenic microorganisms also include any microorganisms that decrease a sensitivity (which also referred to as "have a resistance") to a specific fungicide. The decrease of the sensitivity may be attributed to a mutation at a target site (target site mutations), or may be attributed to any factors other than target site mutation (non-target site mutations).

The composition of the present invention can be applied to plants or cultivation land for the plant to prevent the above plants from the above harmful organisms. Examples of the cultivation land include paddy field, farm land, orchard, turf, and non-agricultural land.

Examples of the plants for which the composition of the present invention can be used include the following plants.
corn (dent corn, flint corn, flour corn, popcorn, glutinous corn, sweet corn, field corn), rices (long grain rice, short grain rice, medium grain rice, Japonica rice, tropical Japonica rice, Indica rice, javanica rice, paddy rice, dry-land rice, floating rice, direct sowing rice, transplanted rice, glutinous rice), wheat (bread wheat (hard wheat, soft wheat, medium wheat, red wheat, white wheat), macaroni wheat, spelt wheat, club wheat, autumn sowing type thereof, spring sowing type thereof), barley (two-row barley (= beer brewing barley), six-row barley), naked barley, pearl barley, autumn sowing type thereof, spring sowing type thereof), rye (autumn sowing type thereof, spring sowing type thereof), triticale (autumn sowing type thereof, spring sowing type thereof), oat (autumn sowing type thereof, spring sowing type thereof), sorghum, cotton (upland cotton, pima cotton), soybean (riped seed hervesting variety, green soybean variety, green cut variety, indeterminate type soybean thereof, determinate soybean thereof, semi-determinate type soybean thereof), peanut, buckwheat, beet (beets for sugar production, beets for feed, beets for root vegetable, beets for leaf vegetable, and beets for fuel), rapeseed (winter rapeseed and spring rapeseed), canola (winter canola and spring canola), sunflower (sunflowers for oil extraction, edible sunflowers, and sunflowers for ornamental purpose), sugar cane, tobacco, tea, mulberry, solanaceous vegetables (eggplant, tomato, green pepper, pepper, and potato, and the others), cucurbitaceous vegetables (cucumber, pumpkin, zucchini, water melon, and melon, and the others), cruciferous vegetables (Japanese radish, white turnip, horseradish, kohlrabi, Chinese cabbage, cabbage, leaf mustard, broccoli and cauliflower, and the others), asteraceous vegetables (burdock, crown daisy, artichoke and lettuce, and the others), liliaceous vegetables (green onion, onion, garlic and asparagus, and the others), ammiaceous vegetables (carrot, parsley, celery and parsnip, and the others), chenopodiaceous vegetables (spinach and Swiss chard, and the others), lamiaceous vegetables (Perilla frutescens, mint, and basil, and the others), strawberry, sweet potato, Dioscorea japonica, colocasia, pomaceous fruits (apple, pear, Japanese pear, Siberian pear, Chinese quince and quince, and the others), stone fleshy fruits (peach, plum, nectarine, Prunus mume, cherry fruit, apricot and prune, and the other), citrus fruits (Citrus unshiu, orange, lemon, lime and grapefruit, and the other), nuts (chestnut, walnuts, hazelnuts, almond, pistachio, cashew nuts and macadamia nuts, and the other), berry fruits (blueberry, cranberry, blackberry and raspberry, and the other), grape, kaki persimmon, fig, olive, Japanese plum, banana, coffee, date palm, coconuts, ornamental plants, forest plants, turfs, and grasses.

The above plants are not specifically limited as long as they are generally cultivated cultivars. The above plants also include plants which may be produced by natural breeding, plants which may be generated by mutation, F1 hybrid plants, and genetically modified plants.

As the method of applying the composition of the present invention to the plants or the cultivation land for the plants, a publicly known techniques can be used, and examples thereof include a foliage spray treatment, a seed treatment, and a soil treatment. The seed treatment means a treatment to seeds or vegetative reproduction organs. A vegetative reproduction organ means a part of plant such as root, stem, and leaf which has a growth capability even when said part is separated from the plant body and placed into soil, which includes, for example, tuberous root, creeping root, bulb, corm or solid bulb, tuber, rhizome, stolon, rhizophore, cane cuttings, propagule, and vine cutting. Examples of the apparatus used in the application include a hand sprayer, a power sprayer, a punkle sprayer, manned aircraft (such as a manned helicopter), an unmanned aerial vehicle (such as radio-controlled helicopter, drone, and the like). Also, on the same timing as the seeding or on several days before and after the seeding, the application can be conducted using a tractor, or a planter, and the like. The composition of the present invention can be used at itself or as a dilution with water.

The composition of the present invention can be prepared by adding Inpyrfluxam, the agrochemically active ingredient (b), lignin sulfonate, and polyoxyalkylene aryl phenyl ether phosphoric acid ester salt, as well as if needed, any additives for formulation to water, followed by stirring and mixing sufficiently with a high-speed stirrer, and then finely grinding with a wet mill (such as bead mill); or by finely grinding Inpyrfluxam and the agrochemically active ingredient (b) with a dry mill (such as a jet mill), followed by adding the Inpyrfluxam and the agrochemically active ingredient (b) which are finely grinded, lignin sulfonate and polyoxyalkylene aryl phenyl ether phosphoric acid ester salt, as well as if needed, any additives for formulation to water, and then stirring and mixing sufficiently with a high-speed stirrer.

In the composition of the present invention, the agrochemically active ingredient is dispersed into water in a form of micro particle, and the particle size of the micro particle is within a range of usually 10 µm or less, preferably 0.1 to 10 µm, and more preferably 0.2 to 7 µm. Examples of the specific particle size include 1.0 µm, 1.5 µm, 1.8 µm, 2.0 µm, 2.5 µm, 3.0 µm, 3.5 µm, and 4.0 µm, and the others. The particle size as used herein represents a volume median diameter. The volume median diameter refers to the particle size with a cumulative frequency of 50 % in the volume-based frequency distribution. The volume median diameter can be calculated by a wet measurement using laser diffraction particle size analyzer. More specifically, the object to be measured is dispersed into water followed by measuring with the device. Examples of the laser diffraction particle size analyzer include Mastersizer 3000 (manufactured by Malvern Instruments).

### EXAMPLES

Hereinafter, the present invention is explained in more detail by using Examples, however, the present invention should not be limited to these examples.

First, a preparation example and a comparative preparation example of aqueous suspension agrochemical composition is described.

### Preparation Example 1

Inpyrfluxam 5.6 parts by weight, tebuconazole 18.7 parts by weight, sodium lignin sulfonate (Reax 85A, manufactured by Ingevity Corp.) 3.7 parts by weight, a mixture of polyoxyethylene tristyryl phenyl ether phosphoric acid ester potassium salt 40 % by weight and propylene glycol 60 % by weight (soprophor FLK, manufactured by Solvay Nicca, Ltd.) 1.9 parts by weight, a silicon defoamer (Xiameter ACP-1500 Antifoam compound, manufactured by Dow Corning Toray Co., Ltd.) 0.1 parts by weight, and deionized water 26.0 parts by weight were mixed to obtain a mixture (i).

The mixture (i) was subjected to a wet grinding with a horizontal type of bead mill (DYNO-MILL KDL, manufactured by WILLY A. BACHOFEN AG Maschinenfabrik) to obtain a suspension. Separately, xanthan gum (Kelzan S plus, manufactured by CP Kelco) 0.2 parts by weight, magnesium aluminum silicate (Veegum R, manufactured by Vanderbilt Corp.) 0.4 parts by weight, propylene glycol 3.0 parts by weight, and a preservative (containing as an active ingredient, 1,2-benzisothiazoline-3-one, Proxel GXL, manufactured by Lonza Group.) 0.2 parts by weight were added to deionized water 21.2 parts by weight, followed by continuing to stir for 2 hours to obtain a mixture (ii). The mixture (ii) was added to the suspension obtained in advance and was mixed, followed by adding a silicon defoamer (Xiameter ACP-1500 Antifoam compound, manufactured by Dow Corning Toray Co., Ltd.) 0.1 parts by weight and deionized water 19.0 parts by weight thereto to obtain an aqueous suspension agrochemical composition of the present invention (hereinafter, referred to as "Composition (1) of the present invention"). The volume median diameter of a micro particle of Inpyrfluxam and Tebuconazole which are contained in the composition (1) of the present invention was 2.0 µm.

### Preparation Example 2

The same procedures as those of the preparation example 1 were conducted except that the use amount of sodium lignin sulfonate (Reax 85A, manufactured by Ingevity Corp.) was changed to 2.8 parts by weight, and the use amount of a mixture of polyoxyethylene tristyryl phenyl ether phosphoric acid ester potassium salt 40 % by weight and propylene glycol 60 % by weight (soprophor FLK manufactured by Solvay Nicca, Ltd.) was changed to 2.8 parts by weight to obtain an aqueous suspension agrochemical composition of the present invention (hereinafter, referred to as "Composition (2) of the present invention"). The volume median diameter of a micro particle of Inpyrfluxam and Tebuconazole which are contained in the composition (2) of the present invention was 1.8 µm.

### Preparation Example 3

The same procedures as those of the preparation example 1 were conducted except that the use amount of sodium lignin sulfonate (Reax 85A, manufactured by Ingevity Corp.) was changed to 1.9 parts by weight, and the use amount of a mixture of polyoxyethylene tristyryl phenyl ether phosphoric acid ester potassium salt 40 % by weight and propylene glycol 60 % by weight (soprophor FLK manufactured by Solvay Nicca, Ltd.) was changed to 3.7 parts by weight to obtain an aqueous suspension agrochemical composition of the present invention (hereinafter, referred to as "Composition (3) of the present invention"). The volume median diameter of a micro particle of Inpyrfluxam and Tebuconazole which are contained in the composition (3) of the present invention was 1.8 um.

### Preparation Example 4

The same procedures as those of the preparation example 1 were conducted except that the use amount of sodium lignin sulfonate (Reax 85A, manufactured by Ingevity Corp.) was changed to 0.9 parts by weight, and the use amount of a mixture of polyoxyethylene tristyryl phenyl ether phosphoric acid ester potassium salt 40 % by weight and propylene glycol 60 % by weight (soprophor FLK manufactured by Solvay Nicca, Ltd.) was changed to 4.7 parts by weight to obtain an aqueous suspension agrochemical composition of the present invention (hereinafter, referred to as "Composition (4) of the present invention"). The volume median diameter of a micro particle of Inpyrfluxam and Tebuconazole which are contained in the composition (3) of the present invention was 1.8 um.

### Comparative Preparation Example 1

Inpyrfluxam 5.6 parts by weight, tebuconazole 18.7 parts by weight, sodium lignin sulfonate (Reax 85A, manufactured by Ingevity Corp.) 5.6 parts by weight, a silicon defoamer (Xiameter ACP-1500 Antifoam compound, manufactured by Dow Corning Toray Co., Ltd.) 0.1 parts by weight, and deionized water 26.0 parts by weight were mixed to obtain a mixture (A-i).

The mixture (A-i) was subjected to a wet grinding with a horizontal type of bead mill (DYNO-MILL KDL, manufactured by WILLY A. BACHOFEN AG Maschinenfabrik) to obtain a suspension. Separately, xanthan gum (Kelzan S plus, manufactured by CP Kelco) 0.2 parts by weight, magnesium aluminum silicate (Veegum R, manufactured by Vanderbilt Corp.) 0.4 parts by weight, propylene glycol 3.0 parts by weight, and a preservative (containing as an active ingredient, 1,2-benzisothiazoline-3-one, Proxel GXL, manufactured by Lonza Group.) 0.2 parts by weight was added to deionized water 21.2 parts by weight, followed by continuing to stir for 2 hours to obtain a mixture (A-ii). The mixture (A-ii) was added to the suspension obtained in advance and was mixed, followed by adding a silicon defoamer (Xiameter ACP-1500 Antifoam compound, manufactured by Dow Corning Toray Co., Ltd.) 0.1 parts by weight, and deionized water 19.0 parts by weight thereto to obtain an aqueous suspension agrochemical composition for comparison (hereinafter, referred to as "Comparative Composition (1)"). The volume median diameter of a micro particle of Inpyrfluxam and Tebuconazole which are contained in the comparative composition (1) was 1.9 µm.

### Comparative Preparation Example 2

Inpyrfluxam 5.6 parts by weight, tebuconazole 18.7 parts by weight, a mixture of polyoxyethylene tristyryl phenyl ether phosphoric acid ester potassium salt 40 % by weight and propylene glycol 60 % by weight (soprophor FLK, manufactured by Solvay Nicca, Ltd.) 5.6 parts by weight, a silicon defoamer (Xiameter ACP-1500 Antifoam compound, manufactured by Dow Corning Toray Co., Ltd.) 0.1 parts by weight, and deionized water 26.0 parts by weight were mixed to obtain a mixture (B-i).

The mixture (B-i) was subjected to a wet grinding with a horizontal type of bead mill (DYNO-MILL KDL, manufactured by WILLY A. BACHOFEN AG Maschinenfabrik) to obtain a suspension. Separately, xanthan gum (Kelzan S plus, manufactured by CP Kelco) 0.2 parts by weight, magnesium aluminum silicate (Veegum R, manufactured by Vanderbilt Corp.) 0.4 parts by weight, propylene glycol 3.0 parts by weight, and a preservative (containing as an active ingredient, 1,2-benzisothiazoline-3-one, Proxel GXL, manufactured by Lonza Group.) 0.2 parts by weight was added to deionized water 21.2 parts by weight, followed by continuing to stir for 2 hours to obtain a mixture (B-ii). The mixture (B-ii) was added to the suspension obtained in advance and was mixed, followed by adding silicon defoamer (Xiameter ACP-1500 Antifoam compound, manufactured by Dow Corning Toray Co., Ltd.) 0.1 parts by weight, and deionized water 19.0 parts by weight thereto to obtain an aqueous suspension agrochemical composition for comparison (hereinafter, referred to as "Comparative Composition (2)"). The volume median diameter of a micro particle of Inpyrfluxam and Tebuconazole which are contained in the comparative composition (2) was 1.9 µm.

Next, a storage stability of the aqueous suspension agrochemical composition of the present invention is described by a Test Example.

### Test Example 1

Each of a foaming property of the aqueous suspension agrochemical compositions respectively which were obtained in the above Preparation Examples 1 to 4 and the Comparative Preparation Examples 1 and 2 was measured. The procedures for the measurement of the foaming property is described below.

The aqueous suspension agrochemical composition 0.5 mL was added to a 250 mL volume of graduated cylinder with a plug in which 195.5 mL of standard water H defined by a Collaborative International Pesticides Analytical Council Limited (CIPAC) was placed, and the graduated cylinder was capped with the plug. The graduated cylinder was subjected to the procedure where the cylinder was inverted 180° at 1 second and was returned back to an original state at 1 second repeatedly thirty times, and was allowed to stand for 1 minute, and thereafter, a volume of a bubble existing on a liquid surface was measured. The result is shown in Table 1. As shown in Table 1, it was found that all of the compositions (1) to (4) of the present invention can suppress a bubble generation during a preparation of a spray liquid.

**[Table 1]**

| | Composition (1) of present invention | Composition (2) of present invention | Composition (3) of present invention | Composition (4) of present invention | Comparative Composition (1) | Comparative Composition (2) |
|---|---|---|---|---|---|---|
| Volume of bubble [mL] | 0 | 0 | 0 | 0 | 24 | 0 |

### Test Example 2

The aqueous suspension agrochemical compositions respectively which were obtained in the above Preparation Examples 1 to 4 and the Comparative Preparation Examples 1 and 2 were placed in a 50 mL glass bottle and sealed with a lid, and followed by storing in a thermostat set at 54 °C for 2 weeks. Ten grams of each aqueous suspension agrochemical composition which was stored in the above thermostat for a prescribed period was taken out to dilute with tap water, followed by passing through with a sieve with mesh opening of 45 µm. The residue remaining on the sieve was transferred to a glass petri dish by washing it away with a deionized water, followed by drying in an oven at 60 °C, and then the weight ratio (%) of the residue as opposed to the weight (10 g) of the used aqueous suspension agrochemical composition was calculated according to the following equation. The result is shown in Table 2. Residue on sieve (%) = (Weight of residue (g)/10 (g)) × 100

In the case that the residue on sieve (%) is high, it means that a large particle is existed in the measured sample. As shown in Table 2, it was found that all of the compositions (1) to (4) of the present invention can suppress a development of a large particle even after a storage at high temperature, which show a superior storage stability.

**[Table 2]**

| | Composition (1) of present invention | Composition (2) of present invention | Composition (3) of present invention | Composition (4) of present invention | Comparative Composition (1) | Comparative Composition (2) |
|---|---|---|---|---|---|---|
| Residue on sieve [%] | 0.05 | 0.06 | 0.05 | 0.04 | 0.05 | 0.18 |

### INDUSTRIAL APPLICABILITY

The present invention can provide an aqueous suspension agrochemical composition having a suppression of both a crystal growth during storage and a bubble generation during preparation of a spray liquid.

## Claims

1. An aqueous suspension agrochemical composition comprising (a) Inpyrfluxam, (b) one or more agrochemically active ingredients having a melting point of 50 °C or high (excluding inpyrfluxam), (c) a lignin sulfonate, and (d) a polyoxyalkylene aryl phenyl ether phosphoric acid ester salt.

2. The aqueous suspension agrochemical composition according to claim 1 wherein the agrochemically active ingredient having a melting point of 50 °C or high is one or more compounds selected from the group consisting of a fungicidal active ingredient, an insecticidal active ingredient, a miticidal active ingredient, and a nematicidal active ingredient.

3. The aqueous suspension agrochemical composition according to claim 1 wherein the agrochemically active ingredient having a melting point of 50 °C or high comprises a fungicidal active ingredient.

4. The aqueous suspension agrochemical composition according to claim 1 wherein the agrochemically active ingredient having a melting point of 50 °C or high comprises one or more compounds selected from the group consisting of a sterol biosynthesis inhibitor and a mitochondrial electron transport chain complex III inhibitor.

5. The aqueous suspension agrochemical composition according to any one of claims 1 to 4 wherein the composition comprises two kinds of (b) the agrochemically active ingredients having a melting point of 50 °C or high.

6. The aqueous suspension agrochemical composition according to claim 5 wherein the two kinds of (b) the agrochemically active ingredients having a melting point of 50 °C or high are a sterol biosynthesis inhibitor and a mitochondrial electron transport chain complex III inhibitor.

7. The aqueous suspension agrochemical composition according to any one of claims 1 to 6 wherein a weight ratio of (c) the lignin sulfonate to (d) the polyoxyalkylene aryl phenyl ether phosphoric acid ester salt is within a range of 6:1 to 1:2.

8. The aqueous suspension agrochemical composition according to any one of claims 1 to 7 wherein a weight ratio of a total amount of (a) Inpyrfluxam and (b) the agrochemically active ingredient having a melting point of 50 °C or high to a total amount of (c) the lignin sulfonate and (d) the polyoxyalkylene aryl phenyl ether phosphoric acid ester salt is within a range of 15:1 to 1:1.

9. The aqueous suspension agrochemical composition according to any one of claims 1 to 8 wherein the composition further comprises any agrochemically active ingredient which is different from (a) Inpyrfluxam and (b) the agrochemically active ingredient having a melting point of 50 °C or high.

10. The aqueous suspension agrochemical composition according to claim 9 wherein the agrochemically active ingredient which is different from (a) Inpyrfluxam and (b) the agrochemically active ingredient having a melting point of 50 °C or high is a bioagrochemically active ingredient.

11. A method for improving a storage stability of an aqueous suspension agrochemical composition, which comprises a step of adding (c) a lignin sulfonate and (d) a polyoxyalkylene aryl phenyl ether phosphoric acid ester salt to a composition comprising (a) Inpyrfluxam and (b) one or more agrochemically active ingredients having a melting point of 50 °C or high (excluding Inpyrfluxam).
